# EUROPÄISCHE PATENTSCHRIFT

(11) **EP 2 455 633 B1**
(45) Veröffentlichungstag und Bekanntmachung des Hinweises auf die Patenterteilung: **13.01.2016**
(21) Anmeldenummer: 10192182.3
(22) Anmeldetag: 23.11.2010
(51) Int. Cl.: F16D 23/14

(54) **Ausrückeinrichtung für eine gezogene Kraftfahrzeugkupplung**
Release device for a pulled type motor vehicle coupling
Dispositif débrayeur pour un embrayage tiré de véhicule automobile

(43) Veröffentlichungstag der Anmeldung: 23.05.2012
(73) Patentinhaber: ZF Friedrichshafen AG, 88038 Friedrichshafen (DE)
(72) Erfinder: Stürmer, Winfried, 97502 Euerbach (DE)

(56) Entgegenhaltungen:
- EP-A1- 0 224 393
- EP-A2- 0 709 591
- WO-A1-94/28327
- FR-A1- 2 545 172

## Beschreibung

Die Erfindung betrifft eine Ausrückvorrichtung für eine gezogene Kraftfahrzeugkupplung, insbesondere für eine membranfederbetätigbare Reibungskupplung, gemäß dem Oberbegriff des Patentanspruchs 1. Zwei verschiedene Ausführungsformen einer solchen gattungsgemäßen Ausrückvorrichtung sind beispielsweise in der DE 195 48 859 C1, der DE 43 21 115 C2und der EP 0 224 393 A1 offenbart. Solche Ausrückvorrichtungen werden hauptsächlich bei Nutzkraftfahrzeugen eingesetzt.

Zum Zusammenbau einer Kupplung mit deren Ausrückvorrichtung an einem Fahrzeugantriebstrang wird gemäß dem in der vorgenannten DE 195 48 859 C1 erläuterten Ausführungsbeispiel ein an einer Membranfeder der Kupplung angeordneter Ausrückring mit einem daran lose befestigten Lastring durch die Wirkung einer Ausrückgabel axial auf die Einführkontur des Ausrücklagers aufgeschoben bzvv. aufgedrückt. Dabei wird der Lastring von dem freien Ende der Einführkontur aufgenommen und im weiteren Verlauf allmählich zentriert, um dann in einem Verformungsbereich, insbesondere einem Aufweitbereich der Einführkontur radial bis zum Erreichen eines maximalen Außendurchmessers der Einführkontur aufgeweitet zu werden und schließlich in eine sich daran anschließende Ringnut einzuschnappen.

Die für dieses Zusammenfügen manuell aufzubringende Kraft ist relativ hoch, wodurch der Vorgang für das Montagepersonal kraftraubend, ermüdend und auch fehleranfällig ist. Das erläuterte Montageprinzip findet ebenfalls bei der, in der DE 43 21 115 C2und der EP 0 224 393 A1 beschriebenen Ausrückvorrichtung in einer geometrisch modifizierten Variante Anwendung.

Von diesem Stand der Technik ausgehend, liegt der Erfindung die Aufgabe zugrunde, eine gattungsgemäße Ausrückvorrichtung so zu verbessern, dass unter Beibehaltung einer axial kurzen Baulänge ein erleichtertes Aufschieben des Lastringes auf dessen Trägerelement ermöglicht wird.

Das vorstehende Problem wird bei einer Ausrückvorrichtung der eingangs erläuterten Art gelöst, indem an dem Verformungsabschnitt eine Konturlinie vorgesehen ist, deren Anstieg in Aufgieitrichtung des Lastringes abnimmt und indem die Einführkontur bezüglich der Aufgleitrichtung des Lastringes mittels einer Kontinuierlichen Kurve konvex gestaltet ist.

Der Erfinder hat erkannt, dass der Kraftaufwand zum Aufschieben des Lastringes auf die Einführkontur des Axiaifortsatzes oder des Ausrückringes nicht allein durch den von diesem jeweils eingenommenen radialen Verformungszustand, der je nach vorliegender Konstruktion ein radial aufgeweiteter oder ein zusammengedrückter Zustand sein kann, des Lastringes bestimmt wird, sondern dass dieser auch von dem Anstieg der Konturlinie beeinflusst wird.

Von dieser Erkenntnis ausgehend wird vorgeschlagen, die von dem Lastring beim Aufgleiten durchfahrene Bahnkurve, d.h. die Konturlinie des Verformungsabschnitts so zu gestalten, dass diese in einer Anfangsposition, in der der Lastring nur vergleichsweise gering verformt, einen Anstieg aufweist, welcher gegenüber einem Anstieg in einer in der axialen Montagerichtung weiter verschobenen Position, größer ist. Durch diese Maßnahme werden die zum Aufschieben des Lastringes erforderlichen Axial-oder Montagekräfte in einem hinteren Teil der Konturlinie, wo bereits eine erhebliche Radialverformung erreicht ist, reduziert. Auf diese Weise wird zwar die, vergleichsweise geringe Montagekraft in einem vorderen Wegteil des Verformungsbereichs mit geringer Verformung des Lastringes etwas erhöht, jedoch wird in einem hinteren Wegteil des Verformungsbereichs die maximal erforderliche Montagekraft erniedrigt. Somit wird insgesamt die Montage einer gattungsgemäßen Ausrückvorrichtung spürbar vereinfacht. Die Einführkontur ist somit bezüglich der Aufgleitrichtung des Lastringes konvex gestaltet, was durch eine kontinuierliche Kurve realisiert wird.

Gemäß einer vorteilhaften Variante ist die erste Anschlagkontur der Ringnut an der Endposition des Verformungsabschnittes ausgebildet.

Nachfolgend wird die Erfindung anhand der beigefügten Figur beispielhaft erläutert. Es zeigen:
- Fig. 1: eine in gezogener Bauweise ausgeführte Ausrückvorrichtung,
- Fig. 2: einen Ausschnitt der Ausrückvorrichtung von Fig. 1 mit einer vergrößerten Darstellung einer Einführkontur und einer Ringnut für einen Lastring.

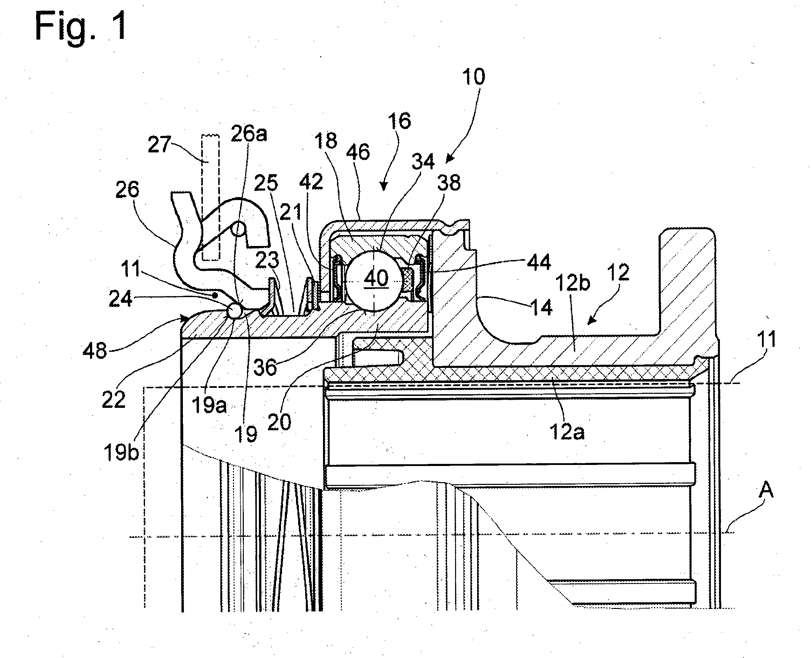

Fig. 1 zeigt eine in gezogener Bauweise ausgeführte Ausrückvorrichtung 10 zum Betätigen einer zeichnerisch nicht dargestellten Kraftfahrzeugreibungskuppiung mit einer in an sich bekannter Weise als Membranfeder ausgeführten Ausrückorgan, deren Federzungen 27 im radial inneren Bereich mit der Ausrückvorrichtung 10 zusammen wirken.

Die Ausrückvorrichtung umfasst zunächst einen auf einem Führungsrohr axial verlagerbaren Lagerträger 12, weicher hier als zweiteilige, ein Innenteil 12a und ein Außenteil 12b umfassende Schiebehülse 12 ausgebildet ist. Die Schiebehülse 12 trägt an einem daran angeordneten Radialflansch 14 ein als Schrägkugellager ausgeführtes Ausrücklager 16. Das Kugellager 16 weist einen bezüglich der Schiebehülse 12 feststehenden ersten, radial äußeren Lagerring 18 und einen umlaufenden zweiten, radial inneren Lagerring 20 auf, welche gemeinsam eine Mittelachse A des Ausrücklagers definieren.

Der innere Lagerring 20 ist mittels eines Axialfortsatzes 22 über das Lager 16 hinaus verlängert und steht mittels einem in einer Ringnut 19 eingeschnappten Lastring 24 und einem als Ausrückring ausgeführten Ausrückring 26 mit den hier zeichnerisch nur teilweise dargestellten Zungenenden einer Membranfeder 27 in Wirkverbindung, weiche das Ausrückorgan der zu betätigenden Reibungskupplung darstellen. Zur Gewährleistung einer spielfreien Anlage des Ausrückringes 26 an dem Lastring 24 dient eine Wellfeder 23, welche in einer am Lagerinnenring 20 ausgeformten Nut 25 eingesetzt ist und sich an einem Sicherungsring 21 axial am Lagerinnenring 20 abstützt. Die Lagerringe 18, 20 weisen zueinander zugewandte Laufbahnen 34, 36 für mehrere in einem Kugelkäfig 38 geführte und von diesem beabstandete Kugeln 40 auf. Zum Schutz vor dem Eindringen von Schmutz und gleichfalls vor dem Austreten von einem im Lagerinneren befindlichen Schmiermittel sind stirnseitig zwischen den Lagerringen 18, 20 zwei Berührungsdichtungen 42, 44 ausgeführt. Der Radialflansch 14 trägt ein an diesem verrolltes Halteblech 46, welches den radial äußeren, feststehenden Lagerring 18 und die Dichtungen 42, 44 umgreift und somit das Wälzlager 16 axial an der Schiebehülse 12 festhält.

In Fig. 1 ist erkennbar, dass der an dem inneren Lagerring 20 vorgesehene Axialfortsatz 22 zur Montage des elastisch radial verformbaren Lastringes 24 eine Einführkontur 48 aufweist, an die sich die Ringnut 19 anschließt. Die Ringnut 19 bildet mit der zum Ausrücklager 16 weisenden Flanke 19b eine erste Anschlagkontur und eine Anlagefläche 26a am Ausrückring 26 bildet eine zweite Anschlagkontur für den beim Ausrücken einer Kupplung druckbelasteten Lastring 24 aus.

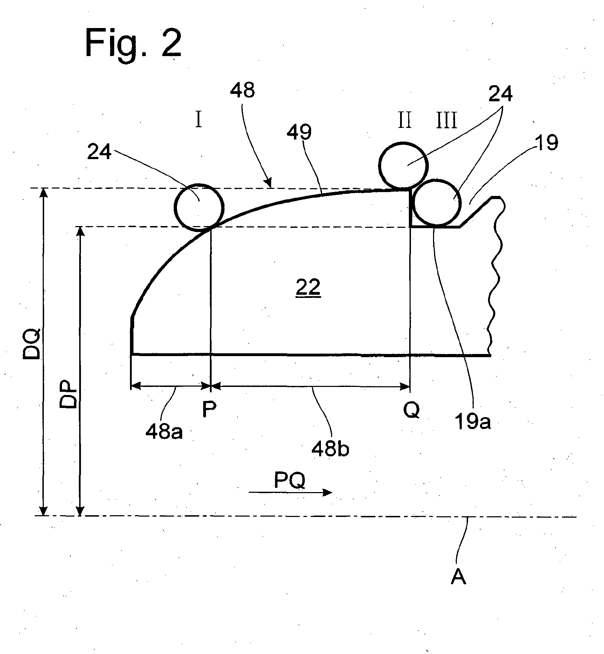

Fig. 2 zeigt eine vergrößerte Darstellung des vorderen, freien Teils des Axialfortsatzes 22 mit der Einführkontur 48 und der Ringnut 19. Der Lastring 24 ist hier als ein in Kreisumfangsrichtung offener Drahtring mit einem runden Querschnitt ausgeführt und in drei verschiedenen, beim Aufschieben von diesem nacheinander eingenommenen Stellungen I-III eingezeichnet. In einer ersten Stellung I ist der Lastring 24 bereits auf die Einführkontur 48, genauer auf einem Zentrierabschnitt 48a eingefädelt und von diesem zentriert. Dieser Zentrierabschnitt 48a ist dadurch gekennzeichnet, dass dessen Außendurchmesser kleiner oder maximal gleich dem Innendurchmesser des Lastrings 24 im entspannten Zustand ist.

In der eingezeichneten Stellung I befindet sich der Lastring 24 am Ende des Zentrierabschnitts 48a und gleichzeitig am Übergang zu einem als Aufweitabschnitt ausgebildeten Verformungsabschnitt 48b, in welchem der Lastring 19 elastisch radial verformt, bei dieser Anordnung insbesondere aufgeweitet wird. Der Verformungs- bzw. Aufweitabschnitt 48b erstreckt sich an der Einführkontur 48 demnach von einer axialen Anfangsposition P, an welcher ein dort zugeordneter Anlagedurchmesser DP etwa einem Wirkungsdurchmesser des Lastringes 24 im entspannten Zustand entspricht, insbesondere im Beispiel jedoch geringfügig größer als der Innendurchmesser des Lastringes 24 im lastlosen Zustand ist, bis hin zu einer axial zwischen der Anfangsposition P und der Ringnut 19 befindlichen Endposition Q, an dem ein dort zugeordneter Anlagedurchmesser DQ und damit die radiale Verformung, hier insbesondere die Aufweitung des Lastrings 24 einen Extremwert, vorliegend in Form eines Maximalwertes erreicht. Während des Aufgleitens wird der Lastring 19 in einen von der zweiten Anschlagkontur 26a begrenzten Freiraum 11 zeitweilig hineingedrängt. Der Verformungsabschnitt 48b ist durch eine von der Anfangsposition P zu der Endposition Q verlaufende Konturlinie 49 charakterisiert, deren Anstieg zwischen diesen beiden Positionen P, Q in der axialen Aufgleitrichtung PQ des Lastringes 24 abnimmt. Das heißt, dass der Verlauf der Konturlinie 49 allmählich abfällt, wie in Fig. 2 deutlich erkennbar ist. In der Stellung III befindet sich der Lastring 24 in der Nut 19 eingeschnappt, deren Nutgrund 19a einen Außendurchmesser aufweist, der etwa gleich und im vorliegenden Beispiel insbesondere geringfügig größer zu dem Wirkungsdurchmesser des Lastrings 24 im entspannten Zustand, vorliegend zu dessen Innendurchmesser, ist. In dem hier behandelten Ausführungsbeispiel sitzt der Lastring 24 somit geringfügig vorgespannt in der Nut 19.

Bei einer weiteren, hier zeichnerisch nicht dargestellten Variante einer erfindungsgemäßen Ausrückeinrichtung liegt eine Konstruktion gemäß der DE 43 21 115 C2 zugrunde, die in deren grundsätzlichen Aufbau mit dem hier erläuterten Ausführungsbeispiel der Fig. 1 übereinstimmt und deren gesamter Offenbarungsgehalt bis auf die konkrete Ausgestaltung der Einführkontur zur Lehre der vorliegenden Erfindung gehört. Insbesondere sind bei dieser Variante einer Ausrückeinrichtung die Einführkontur und die sich daran axial anschließende Ringnut mit der ersten Anschlagkontur an einer radialen Innenumfangsfläche eines Ausrückringes ausgebildet. Hierbei ist an der Außenumfangsfläche eines in den Ausrücl<ring eintauchenden Axialfortsatzes ein Freiraum mit der zweiten Anschlagkontur vorgesehen, wobei der Lastring auch hier zwischen den Anschlagkonturen anliegt. Gemäß der vorliegenden Erfindung weist der Verformungsabschnitt des Ausrückringes eine Konturlinie auf, deren Anstieg in der axialen Aufgleitrichtung des Lastringes abnimmt.

Bei einer noch weiteren, hier ebenfalls zeichnerisch nicht dargestellten Variante einer erfindungsgemäßen Ausrückeinrichtung können die Einführkontur und die sich daran axial anschließende Ringnut mit der ersten Anschlagkontur auch an einer radialen Innenumfangsfläche eines Axialfortsatzes von einem der Lagerringe ausgebildet sein. Hierbei ist an der Außenumfangsfläche eines in den Axialfortsatz eintauchenden Ausrückringes ein Freiraum mit der zweiten Anschlagkontur vorgesehen, wobei der Lastring auch hier zwischen den beiden Anschlagkonturen druckbelastbar anliegt, wenn am Ausrücker Kräfte in Ausrückrichtung wirken. Gemäß der vorliegenden Erfindung weist dabei der Verformungsabschnitt des Axialfortsatzes eine Konturlinie auf, deren Anstieg in der axialen Aufgleitrichtung des Lastringes abnimmt.

## Patentansprüche

1. Ausrückeinrichtung (10) für eine gezogene Kraftfahrzeugkupplung, umfassend
- ein Ausrücklager (16) mit einem radial äußeren und einem radial inneren Lagerring (18; 20), welche gemeinsam eine Mittelachse (A) des Ausrücklagers (16) definieren, wobei
- einer der Lagerringe (18; 20) zum Umlauf mit der Kraftfahrzeugkupplung vorgesehen ist und einen Axialfortsatz (22) aufweist, weiter umfassend
- einen Ausrückring (26), welcher in Wirkverbindung zu dem Axialfortsatz (22) und zu einem Ausrückorgan (27) der Kraftfahrzeugkupplung steht oder bringbar ist, wobei
- an dem Axialfortsatz (22) oder an dem Ausrückring (26) eine Einführkontur (48) und eine axial folgende Ringnut (19) mit einer ersten Anschlagkontur (19b) ausgebildet sind und wobei
- an dem jeweils anderen Teil von Axialfortsatz (22) und Ausrückring (26) ein von einer zweiten Anschlagkontur (26a) begrenzter Freiraum (11) vorgesehen ist, und wobei
- die Ausrückeinrichtung (10) einen radial elastisch verformbaren Lastring (24) umfasst, der in Anlagekontakt zu den Anschlagkonturen steht oder bringbar ist, und wobei
- die Einführkontur (48) einen Verformungsabschnitt (48b) für den Lastring (24) und auf der, der Ringnut (19) abgewandten Axialseite des Verformungsabschnittes (48b) einen Zentrierabschnitt (48a) aufweist,
- wobei sich der Verformungsabschnitt (48b) von einer axialen Anfangsposition (P) bis zu einer axial zwischen der Anfangsposition (P) und der Ringnut (19) befindlichen Endposition (Q) erstreckt und wobei
- an der Anfangsposition (P) ein zugeordneter Anlagedurchmesser (DP) etwa einem Wirkungsdurchmesser des Lastringes (24) im entspannten Zustand entspricht und wobei
- an der Endposition (Q) ein zugeordneter Anlagedurchmesser (DQ) und die radiale Verformung des Lastrings (24) jeweils einen Extremwert erreichen, **dadurch gekennzeichnet,**
- **dass** der Verformungsabschnitt (48b) eine Konturlinie (49) aufweist, deren Anstieg in Aufgleitrichtung (PQ) des Lastringes (24) abnimmt und
- **dass** die Einführkontur (48) bezüglich der Aufgleitrichtung des Lastringes (24) mittels einer kontinuierlichen Kurve konvex gestaltet ist.

2. Ausrückeinrichtung nach Patentanspruch 1, **dadurch gekennzeichnet, dass** die erste Anschlagkontur (19b) der Ringnut (19) an der Endposition (Q) des Verformungsabschnittes (48b) ausgebildet ist.

## Claims

1. Release device (10) for a pulled motor vehicle clutch, comprising
- a clutch release bearing (16) with a radially outer and a radially inner bearing ring (18; 20) which together define a centre axis (A) of the clutch release bearing (16),
- one of the bearing rings (18; 20) being provided so as to circulate with the motor vehicle clutch and having an axial projection (22), further comprising
- a release ring (26) which is in or can be brought into an operative connection with the axial projection (22) and with a release member (27) of the motor vehicle clutch,
- an insertion contour (48) and an axially following annular groove (19) with a first stop contour (19b) being configured on the axial projection (22) or on the release ring (26), and
- a clearance (11) which is delimited by a second stop contour (26a) being provided on the respectively other part of axial projection (22) and release ring (26), and
- the release device (10) comprising a radially elastically deformable load ring (24) which is in or can be brought into bearing contact with the stop contours, and
- the insertion contour (48) having a deformation section (48b) for the load ring (24) and a centring section (48a) on that axial side of the deformation section (48b) which faces away from the annular groove (19),
- the deformation section (48b) extending from an axial starting position (P) as far as an end position (Q) which is situated axially between the starting position (P) and the annular groove (19), and,
- at the starting position (P), an associated bearing diameter (DP) corresponding approximately to an active diameter of the load ring (24) in the relieved state, and,
- at the end position (Q), an associated bearing diameter (DQ) and the radial deformation of the load ring (24) in each case reaching an extreme value,
**characterized**
- **in that** the deformation section (48b) has a contour line (49), the upward gradient of which decreases in the slide-on direction (PQ) of the load ring (24), and
- **in that** the insertion contour (48) is of convex design with regard to the slide-on direction of the load ring (24) by means of a continuous curve.

2. Release device according to Patent Claim 1, **characterized in that** the first stop contour (19b) of the annular groove (19) is configured at the end position (Q) of the deformation section (48b).

## Revendications

1. Dispositif de débrayage (10) pour un embrayage tiré de véhicule automobile, comprenant :
- un palier de débrayage (16) comprenant une bague de palier radialement extérieure et une bague de palier radialement intérieure (18 ; 20) qui définissent ensemble un axe médian (A) du palier de débrayage (16),
- l'une des bagues de palier (18, 20) étant prévue pour tourner avec l'embrayage de véhicule automobile et présentant une saillie axiale (22), et comprenant en outre :
- une bague de débrayage (26) qui est ou peut être amenée en liaison fonctionnelle avec la saillie axiale (22) et avec un organe de débrayage (27) de l'embrayage de véhicule automobile,
- un contour d'insertion (48) et une rainure annulaire le suivant axialement (19), avec un premier contour de butée (19b), étant réalisés sur la saillie axiale (22) ou sur la bague de débrayage (26), et
- un espace libre (11) délimité par un deuxième contour de butée (26a) étant prévu au niveau de l'autre partie respective, la saillie axiale (22) ou la bague de débrayage (26), et
- le dispositif de débrayage (10) comprenant une bague de charge déformable élastiquement radialement (24), qui est ou peut être amenée en contact d'appui avec les contours de butée, et
- le contour d'insertion (48) présentant une partie de déformation (48b) pour la bague de charge (24) et, sur le côté axial de la partie de déformation (48b) opposé à la rainure annulaire (19), une partie de centrage (48a),
- la partie de déformation (48b) s'étendant depuis une position initiale axiale (P) jusqu'à une position terminale (Q) se trouvant axialement entre la position initiale (P) et la rainure annulaire (19) et
- à la position initiale (P), un diamètre d'appui associé (DP) correspondant approximativement à un diamètre d'action de la bague de charge (24) dans l'état détendu et
- à la position terminale (Q), un diamètre d'appui associé (DQ) et la déformation radiale de la bague de charge (24) atteignant à chaque fois une valeur extrême,
**caractérisé en ce que**
- la partie de déformation (48b) présente une ligne de contour (49) dont l'augmentation diminue dans la direction de glissement (PQ) de la bague de charge (24) et
- le contour d'insertion (48) est configuré sous forme convexe au moyen d'une courbe continue par rapport à la direction de glissement de la bague de charge (24).

2. Dispositif de débrayage selon la revendication 1, **caractérisé en ce que** le premier contour de butée (19b) de la rainure annulaire (19) est réalisé au niveau de la position terminale (Q) de la partie de déformation (48b).
